# FASCICULE DE BREVET EUROPEEN

(11) **EP 1 468 147 B1**
(45) Date de publication et mention de la délivrance du brevet: **18.10.2006**
(21) Numéro de dépôt: 02806547.2
(22) Date de dépôt: 11.01.2002
(51) Int. Cl.: E03C 1/06, B05B 1/30

(54) **TUYAU DE DOUCHE AYANT UNE VANNE A DEUX VOIES, ET VANNE A DEUX VOIES POUR UN TUYAU DE DOUCHE**
BRAUSESCHLAUCH MIT EINEM ZWEIWEGEVENTIL UND ZWEIWEGENVENTIL FÜR BRAUSESCHLAUCH
SHOWER HOSE COMPRISING A TWO-WAY VALVE AND TWO-WAY VALVE FOR A SHOWER HOSE

(43) Date de publication de la demande: 20.10.2004
(73) Titulaire: Fentrouci, Hasnne, 1020 Renens (CH)
(72) Inventeur: Fentrouci, Hasnne, 1020 Renens (CH)
(74) Mandataire: Laurent, Jean
(86) Numéro de dépôt international: PCT/CH2002/000018
(87) Numéro de publication internationale: WO 2003/062542

(56) Documents cités:
- DE-B- 1 095 757
- FR-A- 2 792 701

## Description

L'invention concerne une vanne à deux voies pour un tuyau de douche. La vanne comprend un corps à l'intérieur duquel est logé une partie d'un noyau traversé par un conduit longitudinal reliant l'entrée et la sortie de la vanne pour le passage de l'eau. Cette vanne à deux voies se trouve de préférence du côté de la pomme de douche de manière à pouvoir être insérée sur un support mural lors de l'utilisation du tuyau de douche.

L'invention concerne également un tuyau de douche qui comprend une vanne à deux voies reliée à un flexible de douche. Le tuyau de douche est destiné à être connecté entre des moyens d'alimentation en eau sanitaire et une pomme de douche.

La vanne à deux voies, placée de préférence à une extrémité du flexible de douche, peut servir de raccord à une pomme de douche. Elle a pour but d'interrompre partiellement ou complètement le flux de l'eau dans le conduit lorsqu'un organe d'actionnement de la vanne pousse un clapet dans une position de fermeture partielle ou complète du conduit Ainsi, il est possible d'économiser l'eau lorsque l'on prend une douche sans devoir agir sur des robinets d'eau froide et chaude ou sur un levier d'un robinet mélangeur d'eau de moyens d'alimentation en eau sanitaire.

Plusieurs dispositifs économiseurs d'eau lors de la prise d'une douche ont déjà été proposés par le passé. Il est notamment bien connu de munir une pomme de douche d'un dispositif d'interruption de l'écoulement de l'eau. Un organe d'actionnement du dispositif sous forme de levier ou de bouton, par exemple, peut être pressé sur la pomme de douche par la main d'un utilisateur. Sans action sur ledit organe, le dispositif interrompt l'écoulement de l'eau. Par contre en pressant cet organe, cela permet de laisser passer l'eau à travers la pomme de douche. Cependant, le fait de devoir presser ledit organe pour ouvrir le dispositif d'interruption tout en maintenant la pomme de douche dans la main peut être un inconvénient d'un tel dispositif.

Dans le document EP 1 013 976 au nom du Demandeur, il a été proposé un tuyau de douche muni d'une vanne à deux voies qui est placée à une extrémité d'un flexible côté pomme de douche. La vanne comprend un corps à l'intérieur duquel est logé une partie d'un noyau traversé par un conduit longitudinal pour le passage de l'eau. Cette vanne comprend un clapet monté rotatif à l'intérieur du noyau de la vanne et un organe d'actionnement relié au clapet. Le clapet est monté rotatif dans le noyau autour d'un axe perpendiculaire à la direction d'écoulement de l'eau. Sans action sur l'organe d'actionnement, qui peut être un levier rotatif ou un bouton-poussoir, le clapet se trouve dans une position de repos, ce qui permet à l'eau de passer librement à travers un conduit du noyau. Pour interrompre l'écoulement de l'eau, l'organe d'actionnement doit être pressé ou tourné, ce qui est un principe inverse au dispositif décrit ci-devant. Pour presser ou tourner l'organe d'actionnement, le corps de vanne doit être inséré dans un logement d'un support mural de douche de forme complémentaire audit corps. Le clapet, entraîné par l'organe, tourne dans le conduit autour d'un axe perpendiculaire à l'axe longitudinal du conduit afin d'interrompre partiellement ou complètement le flux d'eau dans le conduit.

Etant donné que le clapet doit être monté à l'intérieur du noyau de manière à tourner autour d'un axe perpendiculaire à la direction d'écoulement de l'eau, plusieurs opérations de montage sont nécessaires. Le noyau doit en principe être en deux parties. Dans un premier temps, le clapet est placé à l'intérieur du noyau. Ensuite de quoi l'organe d'actionnement doit être relié audit clapet avant ou après avoir assemblé les deux parties du noyau. Finalement, le noyau avec le clapet, l'organe d'actionnement et des moyens de rappel du clapet est inséré dans le corps de vanne.

Un inconvénient majeur du tuyau de douche ci-dessus est qu'un nombre important d'éléments doivent être fabriqués pour la vanne ce qui nécessite l'emploi d'équipements spécifiques. Différentes opérations de montage desdits éléments de la vanne sont également nécessaires ce qui complique la réalisation d'un tel tuyau de douche. De plus, des garnitures d'étanchéité spécifiques doivent être prévues autour du clapet et pour l'organe d'actionnement, ce qui constitue également un inconvénient. Ces garnitures spécifiques sont difficiles à placer de manière à assurer une bonne étanchéité de la vanne notamment lors d'une commande de fermeture partielle ou complète du conduit. De ce fait, les coûts de réalisation d'un tel tuyau de douche avec une vanne à deux voies sont importants.

Dans le brevet français FR 2 792 701, il est décrit un dispositif d'ouverture et de fermeture automatique d'un conduit d'écoulement d'un fluide. Ce dispositif est une vanne montée de préférence dans une pomme de douche. La vanne comprend un ensemble à clapet ayant un piston guidé dans des moyens de guidage de forme tubulaire, qui sont disposés perpendiculairement au conduit longitudinal. Le piston comprend une gorge circulaire dans une partie intermédiaire pour le passage de l'eau à travers le conduit. Le fluide peut librement traverser le conduit lorsque la gorge circulaire du piston est maintenue dans le conduit par l'action d'un ressort de rappel poussant le piston. Ledit ressort de rappel est placé dans un logement séparé du conduit. Lorsque la pomme de douche est placée dans un support mural le piston est poussé à l'encontre du ressort de rappel pour fermer le conduit.

Dans le dispositif est prévu un logement supplémentaire pour le ressort pour permettre d'ouvrir et fermer le conduit d'écoulement du fluide.

L'invention a donc pour but principal de pallier aux inconvénients de l'art antérieur en proposant des moyens simples pour la fermeture partielle ou complète d'un conduit de la vanne d'un tuyau de douche lorsque la vanne est placée sur un support mural de douche. Les coûts de fabrication sont fortement réduits et la vanne ne comprend plus qu'un nombre réduit d'éléments.

A cet effet, l'invention a pour objet une vanne à deux voies pour un tuyau de douche, qui comprend les caractéristiques mentionnées dans la revendication 1.

Des formes d'exécution avantageuses de la vanne sont définies dans les revendications dépendantes 2 à 5.

A cet effet, l'invention a pour objet également un tuyau de douche, qui comprend les caractéristiques mentionnées dans la revendication 6.

Des formes d'exécution avantageuses du tuyau de douche sont définies dans les revendications dépendantes 7 à 10.

Un avantage du tuyau de douche et de la vanne à deux voies, selon l'invention, est que l'ensemble d'actionnement à clapet de la vanne est facile à réaliser et à monter dans les moyens de guidage du noyau de la vanne. L'ensemble d'actionnement, qui peut être constitué d'une seule pièce ou de plusieurs pièces emboîtées l'une dans l'autre, est glissé avec les moyens de rappel dans les moyens de guidage du noyau en une seule opération. Après quoi, le corps peut être fixé sur le noyau afin de maintenir l'ensemble d'actionnement à clapet dans les moyens de guidage. De ce fait, il n'est pas nécessaire d'employer des équipements spécifiques pour la fabrication d'un tel tuyau de douche et de sa vanne à deux voies, ce qui réduit fortement les coûts de fabrication.

Un autre avantage du tuyau de douche et de la vanne à deux voies, selon l'invention, est que le déplacement de chaque ensemble d'actionnement à clapet dans les moyens de guidage se fait dans une direction perpendiculaire à la direction d'écoulement de l'eau dans le conduit. Ainsi, un simple anneau d'étanchéité placé dans une rainure circulaire de chaque ensemble suffit pour garantir une bonne étanchéité de la vanne. Cet anneau d'étanchéité de chaque ensemble est toujours en contact direct avec une surface tubulaire des moyens de guidage lors du déplacement de chaque ensemble d'actionnement à clapet.

Dans une variante de réalisation avantageuse du tuyau de douche et de sa vanne, une rotation de chaque ensemble peut être imposé lors de leur déplacement dans une direction perpendiculaire à l'axe longitudinal du conduit.

Sans action sur l'ensemble d'actionnement à clapet, l'eau peut s'écouler librement à travers le conduit longitudinal de la vanne. L'interruption de cet écoulement n'intervient qu'au moment de l'insertion du corps de la vanne dans un logement d'un support mural de forme complémentaire à la forme extérieure du corps de vanne. Comme la partie supérieure de chaque ensemble est de préférence arrondie, cela facilite le déplacement de chaque ensemble dans une position de fermeture partielle ou complète du conduit lors de l'insertion dans le logement du support mural.

Comme le tuyau de douche peut être utilisé notamment dans des hôtels pour économiser l'eau lors de la prise d'une douche, il peut être avantageux que la vanne soit fixée de manière indémontable au flexible. Ainsi, cela peut éviter aux clients de l'hôtel notamment de dérober la vanne à deux voies du tuyau de douche. Dans le cas où la vanne est placée en tant que raccord entre le flexible de douche et la pomme de douche, il serait bien entendu plus facile de la dérober.

Les buts, avantages et caractéristiques du tuyau de douche et de la vanne à deux voies pour le tuyau de douche apparaîtront mieux dans la description suivante de formes d'exécution illustrées par les dessins sur lesquels :

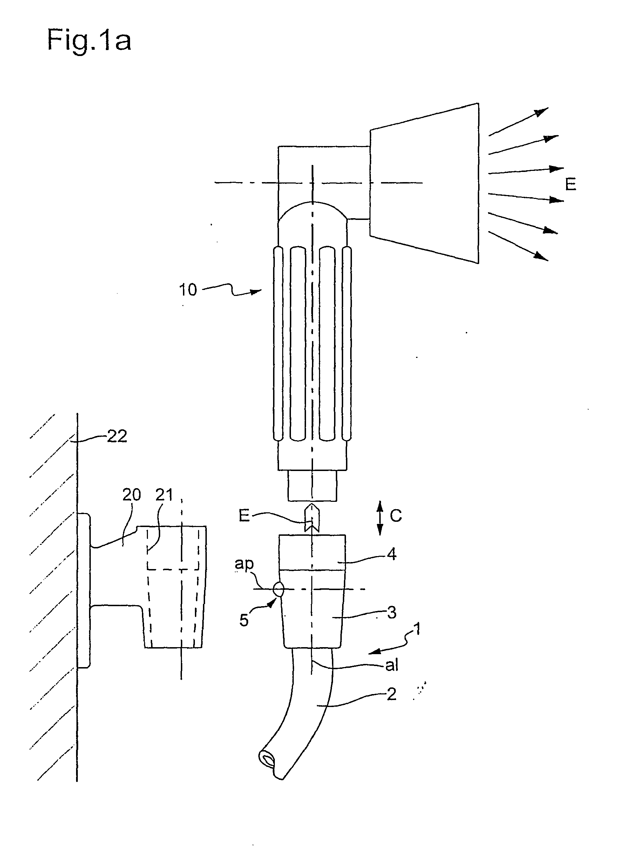

la figure 1a représente une vue d'une partie d'un tuyau de douche, selon l'invention, avec une vanne à deux voies pour la connexion à une pomme de douche, la vanne étant en dehors d'un support de douche pour laisser couler l'eau à travers la pomme de douche,
la figure 1 b représente une vue d'une partie d'un tuyau de douche, selon l'invention, dont la vanne à deux voies repose sur un support mural afin d'interrompre complètement ou partiellement l'écoulement de l'eau dans la pomme de douche,
la figure 2a représente une coupe longitudinale d'une première forme d'exécution d'une extrémité d'un tuyau de douche avec une vanne à deux voies, selon l'invention, disposant d'un ensemble d'actionnement à clapet dans une position de repos,
la figure 2b représente une coupe longitudinale d'une première forme d'exécution d'une extrémité d'un tuyau de douche avec une vanne à deux voies, selon l'invention, disposant d'un ensemble d'actionnement à clapet en position de fermeture partielle ou complète de la vanne,
la figure 3a représente une coupe longitudinale d'une seconde forme d'exécution d'une extrémité d'un tuyau de douche avec une vanne à deux voies, selon l'invention, disposant de deux ensembles d'actionnement à clapet en opposition dans une position de repos,
la figure 3b représente une coupe longitudinale d'une seconde forme d'exécution d'une extrémité d'un tuyau de douche avec une vanne à deux voies, selon l'invention, disposant de deux ensembles d'actionnement à clapet en opposition en position de fermeture partielle ou complète de la vanne,
la figure 4 représente une coupe partielle d'une troisième forme d'exécution d'une extrémité d'un tuyau de douche avec une vanne à deux voies, selon l'invention, démontable du flexible de douche,
la figure 5 représente une coupe partielle d'une quatrième forme d'exécution de la vanne d'un tuyau de douche, selon l'invention, disposant d'au moins un ensemble d'actionnement à clapet en position de fermeture partielle ou complète de la vanne, et
la figure 6 représente une vue éclatée en coupe d'une forme de réalisation d'un ensemble d'actionnement à clapet ayant deux pièces ou portions s'emboîtant l'une dans l'autre pour enfermer un anneau d'étanchéité.

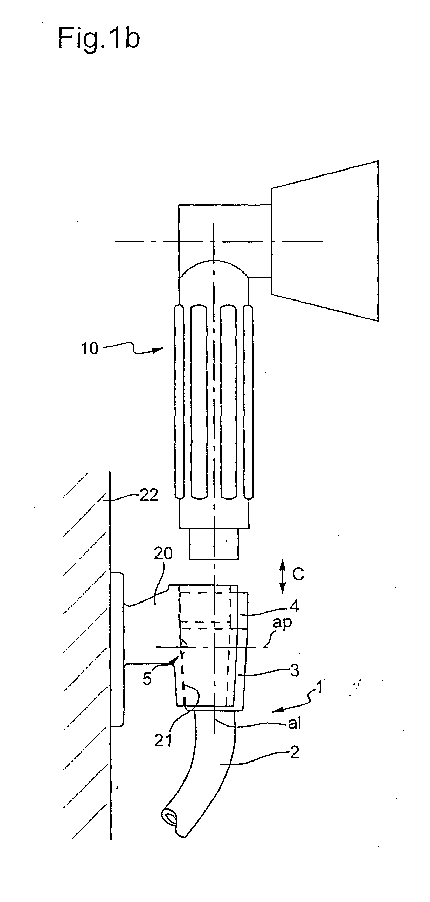

En référence aux figures 1 a et 1 b, le tuyau de douche 1 est montré de manière simplifiée dans un mode d'utilisation lors d'une prise d'une douche. La pomme de douche 10, qui doit normalement être connectée à l'extrémité du tuyau de douche 1, est représentée séparée selon la flèche C de ladite extrémité. Ainsi, cela permet de bien montrer l'écoulement de l'eau E à la sortie du tuyau 1 et de la pomme de douche 10 à la figure 1 a.

Le tuyau de douche 1, partiellement représenté aux figures 1 a et 1 b, comprend un flexible de douche conventionnel 2 relié à une vanne à deux voies 3, 4 servant de raccord pour la pomme de douche 10. La vanne à deux voies comprend un noyau 4 logé en partie dans un corps 3, et un ensemble d'actionnement à clapet 5. L'ensemble d'actionnement 5 est susceptible d'être déplacé selon un axe perpendiculaire ap par rapport à l'axe longitudinal al d'un conduit du noyau 4 pour le passage de l'eau. Uniquement la partie supérieure, de préférence de forme arrondie, de l'ensemble est visible sur les figures 1a et 1b. Cette partie supérieure joue le rôle d'organe d'actionnement de l'ensemble d'actionnement à clapet, alors qu'une partie inférieure non visible forme le clapet de l'ensemble.

A la figure 1 a, il est montré que l'extrémité du tuyau de douche 1 n'est pas insérée dans un logement intérieur 21 d'un support 20 fixé à un mûr 22 d'une salle de bain. Ainsi, l'eau peut s'écouler librement à travers le conduit de la vanne du tuyau de douche 1 et la pomme de douche 10 maintenue par la main d'un utilisateur, car l'ensemble d'actionnement 5 est dans une position de repos. Des moyens de rappel, non visibles dans les figures 1 a et 1 b, maintiennent l'ensemble d'actionnement à clapet dans cette position de repos.

Il est à noter que le logement intérieur 21 du support 20 devant accueillir le corps 3 de la vanne est de forme complémentaire à la surface extérieure du corps de vanne. Une ouverture longitudinale du support 20 doit être suffisamment grande pour laisser passer le flexible 2 du tuyau de douche et pour pouvoir insérer le corps de vanne dans le logement 21. Cette ouverture du support peut éventuellement être fermée par une pièce complémentaire une fois que le flexible a été introduit par l'ouverture dans le logement 21. Cette variante d'exécution du support de douche avec cette pièce complémentaire peut servir par exemple dans des hôtels soucieux de l'économie d'eau.

La forme extérieure du corps 3 de la vanne est de préférence tronconique afin de pouvoir insérer et maintenir la vanne par coincement dans le logement 21 du support mural 20 de forme complémentaire. Bien entendu, la forme extérieure du corps 3 peut aussi être pyramidale ou d'une autre forme. Toutefois, le diamètre extérieur du corps à la connexion au flexible de douche 2 est inférieur au diamètre extérieur du corps du côté de la pomme de douche. Ainsi, la vanne peut être aisément insérée et maintenue par coincement et par son propre poids dans le logement 21 du support mural 20.

A la figure 1 b, il est montré que l'extrémité du tuyau de douche est insérée dans le logement 21 du support mural 20. L'ensemble d'actionnement à clapet 5 se déplace à l'encontre des moyens de rappel vers une position de fermeture partielle ou complète du conduit de la vanne. Ainsi, l'écoulement de l'eau est interrompu. La forme arrondie de la partie supérieure de l'ensemble 5 facilite le déplacement de l'ensemble dès l'introduction du corps 3 de vanne dans le logement intérieur 21 du support mural.

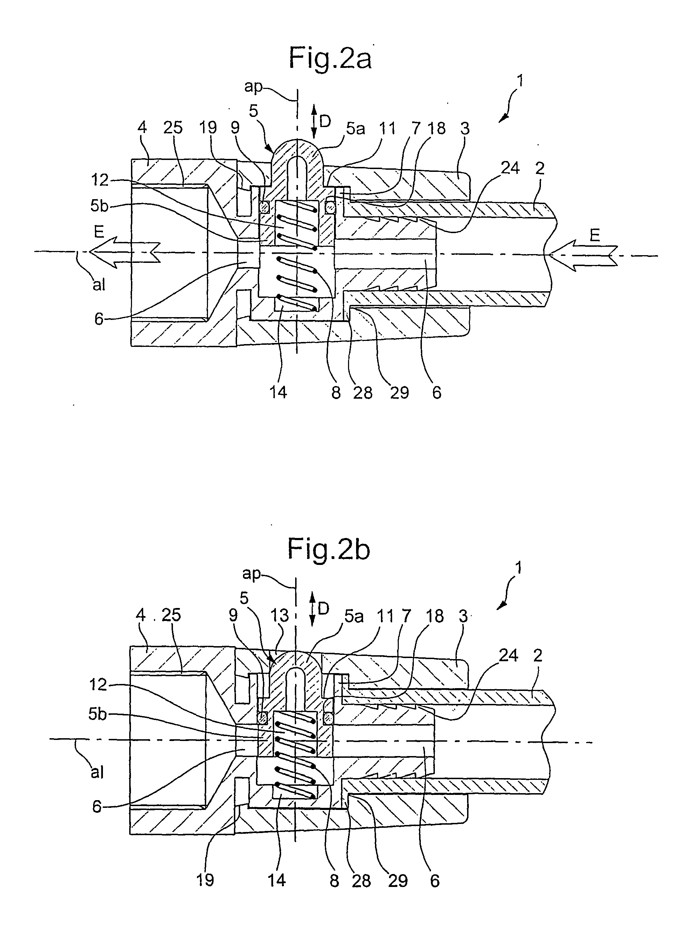

Une première forme d'exécution du tuyau de douche et de la vanne à deux voies est représentée en coupe aux figures 2a et 2b. A la figure 2a, l'ensemble d'actionnement à clapet 5 occupe une position de repos ce qui permet un écoulement E de l'eau à travers le conduit 6 du noyau 4. Par contre à la figure 2b, l'ensemble d'actionnement à clapet 5 occupe une position de fermeture partielle ou complète du conduit 6. Bien entendu, le déplacement dans la direction D de l'ensemble d'actionnement à clapet 5 est obtenu lors de l'insertion du corps 3 de vanne dans un support mural de douche. Toutefois par mesure de simplification, la figure 2b ne représente que l'état de la vanne dans la position de fermeture partielle ou complète du conduit 6.

La vanne à deux voies comprend un noyau 4 logé en partie à l'intérieur d'un corps 3. Un conduit longitudinal 6 dans le noyau 4 permet l'écoulement de l'eau entre l'entrée et la sortie de la vanne si l'ensemble d'actionnement à clapet 5 occupe une position de repos.

L'ensemble d'actionnement à clapet 5 est guidé, pour son déplacement dans une direction D perpendiculaire à l'axe longitudinal al du conduit, par des moyens de guidage 7. Dans cette première forme d'exécution, ces moyens de guidage 7 sont constitués par une partie tubulaire ouverte du noyau 4 depuis le conduit 6 à une surface intérieure du corps 3. La surface intérieure de guidage de cette partie tubulaire peut être de préférence cylindrique tout comme la surface extérieure de l'ensemble d'actionnement 5 guidée dans la partie tubulaire. Toutefois, il est bien entendu possible que la surface intérieure de guidage soit une partie tubulaire de section polygonale, ainsi que la surface extérieure guidée de l'ensemble. Dans ce cas, l'ensemble d'actionnement à clapet 5 ne peut pas tourner dans les moyens de guidage 7, ce qui n'a aucune importance lors d'une opération de fermeture partielle ou complète du conduit 6.

Pour assurer une bonne étanchéité de la vanne, une rainure circulaire 18 est réalisée sur l'ensemble d'actionnement à clapet 5 pour loger un anneau d'étanchéité 9 en élastomère. L'anneau d'étanchéité est toujours en contact avec la surface intérieure de guidage des moyens de guidage 7 lors du déplacement de l'ensemble d'actionnement 5 entre une position de repos et une position de fermeture partielle ou complète du conduit 6. Cet anneau d'étanchéité 9 est situé entre une partie inférieure 5b formant clapet de l'ensemble d'actionnement 5 et une partie supérieure 5a servant à l'actionnement de l'ensemble.

La partie supérieure 5a est de section transversale inférieure à la portion de l'ensemble guidée dans les moyens de guidage 7. Cette partie supérieure 5a de forme arrondie débouche hors du corps 3 de vanne à travers une ouverture 13 du corps dans une position de repos de l'ensemble d'actionnement à clapet 5. Elle est reliée par une tige de même diamètre à la portion guidée de l'ensemble 5 à travers l'ouverture 13 du corps 3. Un épaulement 11 de la portion guidée de l'ensemble vient en butée contre une surface intérieure du corps 3 autour de l'ouverture 13 en position de repos. Ainsi, uniquement la demi-sphère de la partie supérieure 5a dépasse de la surface extérieure du corps 3 de manière à servir d'organe d'actionnement de l'ensemble.

Dans cette première forme d'exécution, la partie supérieure 5a, la portion guidée dans les moyens de guidage 7, ainsi que la partie inférieure 5b formant clapet ne forment qu'une seule pièce. L'anneau d'étanchéité 9 doit être placé dans la rainure 18 de l'ensemble d'actionnement 5 avant d'introduire l'ensemble dans le noyau 4.

Pour permettre à l'ensemble d'actionnement à clapet 5 d'occuper une position de repos sans action sur la partie supérieure 5a, des moyens de rappel 8 sont prévus à l'intérieur du noyau 4. De préférence, ces moyens de rappel sont constitués par un ressort hélicoïdal 8 de compression traversant perpendiculairement le conduit 6. Le ressort est de préférence réalisé en acier inoxydable. Le ressort 8 est maintenu dans un logement 14 du noyau réalisé d'un côté du conduit 6 opposé au côté logeant l'ensemble d'actionnement 5. Une portion de ressort 8 est également placée dans un logement intérieur 12 de l'ensemble d'actionnement 5 pour son maintien.

Lors du montage des éléments de la vanne, une portion du ressort 8 est tout d'abord placée dans le logement de l'ensemble d'actionnement à clapet. Après cette étape, l'ensemble d'actionnement 5 avec le ressort 8 sont introduits dans les moyens de guidage 7 du noyau jusqu'à ce qu'une extrémité du ressort soit maintenue dans le logement 14 du noyau 4. Par la suite, le ressort est comprimé par l'ensemble pressé jusqu'à ce que le sommet de la partie supérieure 5a arrive à fleur de l'ouverture supérieure des moyens de guidage 7. Finalement, le corps 3 vient recouvrir le noyau et la partie supérieure 5a de l'ensemble passe à travers l'ouverture 13 du corps. Ainsi, l'épaulement 11 de l'ensemble vient en butée contre une surface intérieure du corps 3 grâce au ressort 8 exerçant une force de rappel à l'ensemble vers la position de repos.

Dans une variante de réalisation intérieure du corps 3 et la portion guidée de l'ensemble d'actionnement 5. Toute autre forme de ressort peut bien entendu être utilisée pour autant que l'ensemble d'actionnement 5 se trouve toujours dans une position de repos sans qu'il soit pressé. Les moyens de rappel peuvent également être constitués uniquement par une surface inclinée de la partie inférieure 5b de l'ensemble d'actionnement 5. Ainsi, l'ensemble d'actionnement 5 est toujours amené vers sa position de repos par la force de l'eau s'écoulant à travers le conduit longitudinal 6.

De manière à assurer en retour de l'ensemble d'actionnement 5 de la position de fermeture partielle ou complète du conduit, montrée à la figure 2b, à la position de repos, montrée à la figure 2a, le conduit 6 du côté de la partie terminale 24 peut être de section transversale rectangulaire. Cela permet à l'eau, comprimée contre la partie inférieure formant clapet 5b de l'ensemble lors de la fermeture du conduit, d'aider le ressort 8 à pousser l'ensemble d'actionnement en direction de la position de repos.

Dans cette première forme d'exécution, l'extrémité 28 du flexible de douche 2 est maintenue à l'intérieur de la vanne contre un appui 29 du corps 3, lorsque ce dernier est fixé sur le noyau 4 de la vanne. De cette façon, le flexible de douche 2 est fixée d'une manière indémontable à la vanne à deux voies. L'extrémité 24 du noyau, insérée à l'intérieur du flexible, peut comprendre des crans en périphérie pour également assurer un maintien du flexible 2. La fixation du corps 3 de vanne au noyau 4 peut être obtenu à l'aide de pattes 19 venant s'encliqueter sur les moyens de guidage 7 du noyau. Tout autre moyen de fixation du corps 3 sur le noyau 4 peut bien entendu être imaginé.

La partie du noyau 4, comprenant les éléments essentiels de la vanne décrits ci-devant, sont à l'intérieur du corps. Par contre, une extrémité du noyau, côté pomme de douche, constitue une partie externe du noyau. Un rebord de la partie externe du noyau 4 s'appuie, après insertion du noyau 4 dans le corps 3, sur le col du corps. L'extrémité extérieure dudit noyau 4 est constituée de préférence d'un pas de vis intérieur 25 afin de pouvoir visser un manche de pomme de douche non visible sur les figures 2a et 2b. D'autres moyens de connexion entre le noyau 4 et le manche de la pomme de douche sont toutefois envisageables.

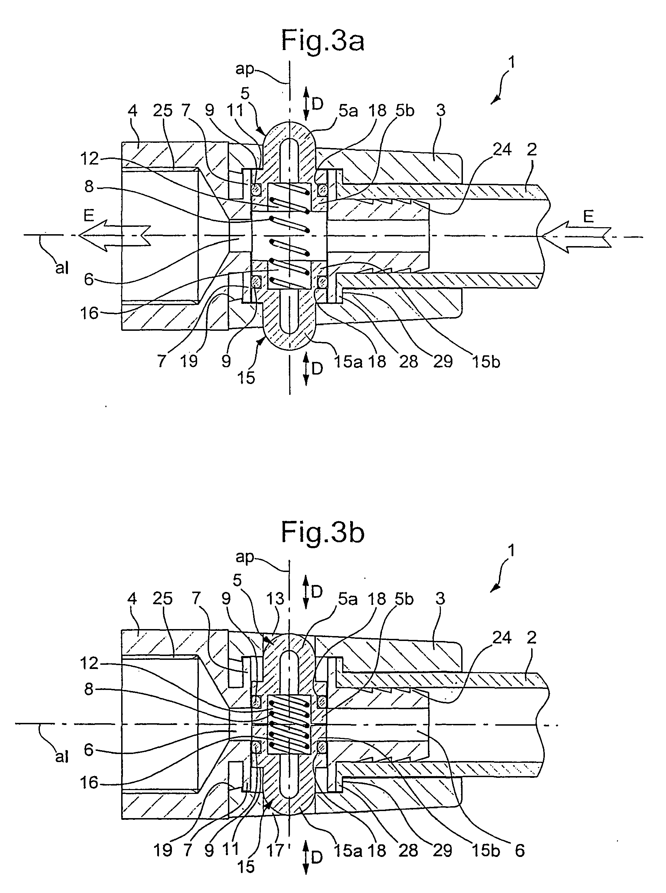

Une seconde forme d'exécution du tuyau de douche et de la vanne à deux voies est représentée en coupe aux figures 3a et 3b. Par simplification, uniquement les éléments de la vanne se différenciant de ceux décrits en référence aux figures 2a et 2b sont relatés. Il est à noter que les éléments de ces figures 3a et 3b, qui correspondent à ceux des figures 2a et 2b, portent des signes de référence identiques. Le flexible de douche 2 est fixé de manière indémontable à la vanne comme pour la première forme d'exécution.

A la figure 3a, les deux ensembles d'actionnement à clapet 5 et 15 occupent une position de repos ce qui permet un écoulement E de l'eau à travers le conduit 6 du noyau 4. Les deux ensembles d'actionnement 5 et 15 se font face et sont guidés de deux côtés opposés du conduit 6 dans des moyens de guidage 7 du noyau 4. La surface intérieure des moyens de guidage 7 est de forme tubulaire ouverte de part et d'autre. Cette surface intérieure 7 peut être par exemple cylindrique ou polygonale tout comme la surface extérieure guidée de chaque ensemble 5 et 15. Les axes longitudinaux ap des deux parties des moyens de guidage 7 sont de préférence confondus et perpendiculaires à l'axe longitudinal al du conduit 6.

Le ressort hélicoïdal de compression 8 comprend une première portion placée dans un premier logement intérieur 12 du premier ensemble d'actionnement à clapet 5 et une seconde portion placée dans un second logement intérieur 16 du second ensemble d'actionnement 15. Après le montage de tous les éléments de la vanne, la partie supérieure 5a du premier ensemble 5 passe à travers l'ouverture 13 du corps 3, et la partie supérieure 15a du second ensemble 15 passe à travers une ouverture opposée 17 du corps 3. En position de repos, l'épaulement 11 de chaque ensemble 5 et 15 vient en butée contre une surface intérieure du corps autour de chaque ouverture 13 et 17 par la force de rappel exercée par le ressort comprimé 8.

Il est à noter que pour le montage de la vanne, le corps 3 peut être en deux parties qui sont réunies par la suite autour du noyau pour enfermer les deux ensembles d'actionnement à clapet dans leurs moyens de guidage.

La partie inférieure 5b et 15b formant clapet de chaque ensemble est de dimension inférieure à la partie inférieure 5b montrée en référence aux figures 2a et 2b, car chaque partie inférieure 5b et 15b doit être amenée à proximité du centre du conduit lors d'une opération de fermeture du conduit.

A la figure 3b, les ensembles d'actionnement à clapet 5 et 15 occupent une position de fermeture partielle ou complète du conduit 6 avec les deux parties inférieures 5b et 15b pouvant venir en contact l'une de l'autre. Bien entendu, le déplacement dans la direction D de chaque ensemble d'actionnement à clapet 5 et 15 est obtenu lors de l'insertion du corps 3 de vanne dans le support mural de douche.

De manière à assurer en retour des ensembles d'actionnement 5 et 15 de la position de fermeture partielle ou complète du conduit 6 à la position de repos, le conduit 6 du côté de la partie terminale 24 peut être de section transversale circulaire. Cela permet à l'eau, comprimée contre les parties inférieures formant clapet 5b et 15b des ensembles lors de la fermeture du conduit, d'aider le ressort 8 à pousser chaque ensemble d'actionnement 5 et 15 en direction de la position de repos.

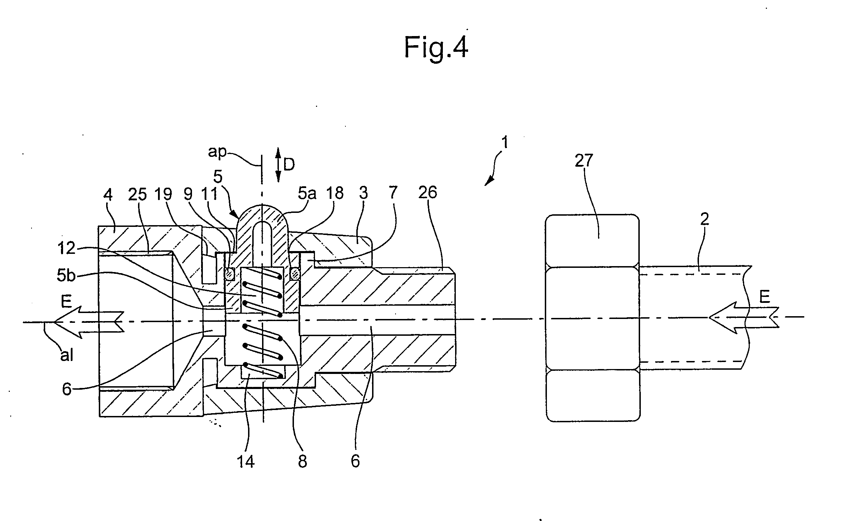

Une troisième forme d'exécution du tuyau de douche et de la vanne à deux voies est représentée en coupe partielle à la figure 4. La vanne à deux voies est montrée dans une position de repos de l'ensemble d'actionnement à clapet 5 permettant l'écoulement E de l'eau à travers le conduit 6 du noyau 4. Les éléments constituant la vanne sont les mêmes que ceux décrits en référence aux figures 2a et 2b et portent ainsi des signes de référence identiques.

La différence essentielle de cette troisième forme d'exécution réside dans les moyens de fixation de la vanne à deux voies au flexible de douche 2. Une partie terminale du noyau 4, sortant du corps 3 de la vanne du côté flexible, porte par exemple un filetage 26 sur la surface extérieure. Un flexible de douche 2 de type conventionnel peut donc être vissé à l'aide de son écrou 27 sur la partie filetée 26 du noyau 4. De cette façon, la vanne et le flexible peuvent être fixés de manière amovible. Bien entendu, ces moyens de fixation de la vanne au flexible peuvent être également prévus dans une forme d'exécution du tuyau de douche similaire à la seconde forme d'exécution montrée aux figures 3a et 3b.

Dans une variante de réalisation des moyens de fixation, l'extrémité du flexible 2 peut comprendre un filetage extérieur de manière à être vissé dans une partie filetée intérieure du corps 3 de vanne. Il est bien clair que tout autre moyen de fixation peut encore être imaginé pour relier de manière amovible la vanne au flexible de douche.

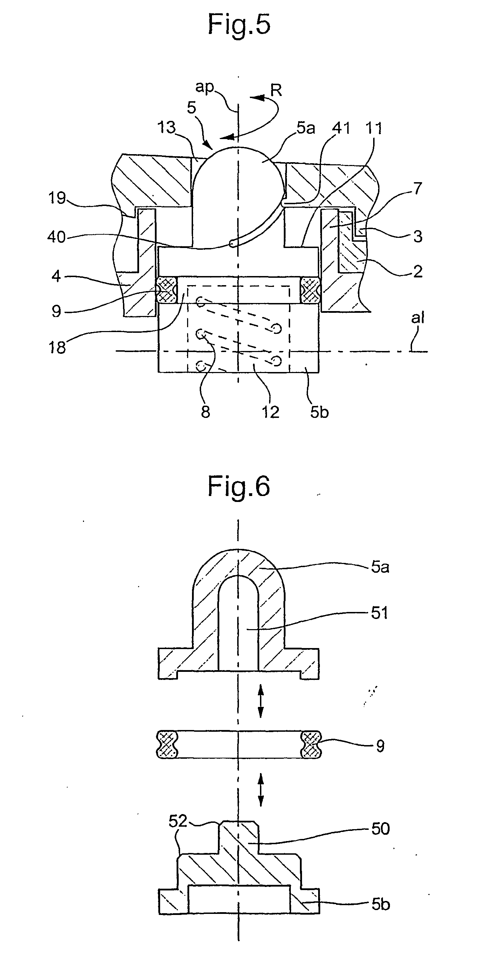

La figure 5 représente une quatrième forme d'exécution de la vanne à deux voies basée sur une réalisation selon la première, la seconde ou la troisième forme d'exécution illustrées aux figures 2 à 4. Dans cette figure 5, l'ensemble d'actionnement à clapet 5 est montré avec une rainure 40 pratiquée sur une partie d'actionnement de l'ensemble. Cette rainure 40 décrit une portion d'hélice autour de l'axe de rotation ap de l'ensemble d'actionnement 5. L'ouverture 13 du corps 3 comprend une protubérance 41 logée dans la rainure 40. Ceci permet d'imposer une rotation R de l'ensemble 5 autour de son axe longitudinal ap lors de son déplacement D pour la fermeture ou l'ouverture du conduit de la vanne. Bien entendu, une fente pourrait être prévue dans l'ouverture 13 du corps coopérant avec une saillie décrivant une portion d'hélice sur la partie d'actionnement de l'ensemble. De plus comme expliqué en référence aux figures 3a et 3b, les deux ensembles d'actionnement peuvent comprendre chacun une rainure dans laquelle une protubérance de chaque ouverture du corps est guidée pour les opérations de fermeture et d'ouverture du conduit de la vanne.

Dans toutes les formes d'exécution présentées en référence aux figures 2 à 5, la partie supérieure, la portion guidée dans les moyens de guidage, ainsi que la partie inférieure formant clapet de chaque ensemble d'actionnement ne forment qu'une seule pièce. Cependant pour faciliter le montage de l'anneau d'étanchéité 9 en élastomère dans la rainure circulaire 18 de chaque ensemble, l'ensemble d'actionnement peut comprendre deux pièces ou portions destinées à s'emboîtées l'une dans l'autre. La figure 6 montre une vue éclatée en coupe d'un tel ensemble d'actionnement à clapet 5.

L'ensemble d'actionnement à clapet comprend donc une première pièce, qui comprend la partie formant clapet 5b, l'anneau d'étanchéité 9 et une seconde pièce, qui comprend la partie supérieure 5a servant d'organe d'actionnement de l'ensemble. Après avoir placé l'anneau d'étanchéité 9 sur la première pièce, une partie sommitale 50 de la première pièce doit être insérée, par exemple à force, dans un logement 51 de la seconde pièce. Des chanfreins 52 sont pratiqués sur des parties de la première pièce de manière à faciliter l'insertion de la partie sommitale 50 dans le logement 51 de la seconde pièce.

A partir de la description qui vient d'être faite de multiples variantes de réalisation du tuyau de douche et de la vanne à deux voies peuvent être conçues par l'homme du métier sans sortir du cadre de l'invention définie par les revendications. Le corps et le noyau de la vanne, ainsi que l'ensemble d'actionnement sans l'anneau d'étanchéité, peuvent être conçus dans un matériau plastique ou dans un matériau métallique. La forme de la partie supérieure de chaque ensemble d'actionnement peut être également tronconique ou pyramidale ou toute autre forme. La partie supérieure doit pouvoir être facilement pressée pour assurer la fermeture partielle ou complète du conduit lorsque la vanne est insérée dans le logement du support mural. La surface intérieure de guidage des moyens de guidage peut comprendre également une saillie rectiligne coopérant avec une rainure de chaque ensemble parallèle à son axe longitudinal. Ceci permet d'éviter une rotation de chaque ensemble lors de son déplacement dans une direction perpendiculaire à l'axe longitudinal du conduit du noyau.

## Revendications

1. Vanne à deux voies pour un tuyau de douche (1), une entrée de ladite vanne étant destinée à être reliée de manière amovible au flexible de douche (2) et une sortie de la vanne étant destinée à être connectée à une pomme de douche (10), ladite vanne comprenant un corps (3) à l'intérieur duquel est logé une partie d'un noyau (4) traversé par un conduit longitudinal (6) reliant l'entrée et la sortie de la vanne pour le passage de l'eau, la vanne comprenant au moins un ensemble d'actionnement à clapet (5), des moyens de guidage (7) de l'ensemble d'actionnement dans le noyau de la vanne et des moyens de rappel (8) de l'ensemble d'actionnement à une position de repos, l'ensemble d'actionnement à clapet (5) pouvant être déplacé dans une direction (D) sensiblement perpendiculaire à l'axe longitudinal du conduit (6) entre une position de fermeture partielle ou complète, dans laquelle une partie inférieure formant clapet (5b) de l'ensemble ferme partiellement ou complètement le conduit (6), et une position de repos, dans laquelle l'eau peut passer librement à travers le conduit (6) du noyau (4) entre l'entrée et la sortie de la vanne, l'ensemble d'actionnement à clapet (5) comprenant une partie supérieure (5a) débouchant hors du corps (3) de vanne et formée de telle manière à permettre le déplacement de l'ensemble de la position de repos à la position de fermeture partielle ou complète du conduit (6) lorsque la vanne est insérée dans un logement (21) d'un support mural (20) de douche de forme complémentaire à la forme extérieure du corps (3) de la vanne, **caractérisée en ce que** les moyens de rappel sont constitués par une surface inclinée de la partie inférieure formant clapet de l'ensemble d'actionnement de manière à amener l'ensemble d'actionnement vers sa position de repos par la force de l'eau dans le conduit, ou par un ressort (8) traversant perpendiculairement le conduit et poussant l'ensemble d'actionnement vers sa position de repos.

2. Vanne selon la revendication 1, **caractérisée en ce que** les moyens de rappel sont constitués par un ressort (8) traversant perpendiculairement le conduit longitudinal (6) de section transversale rectangulaire, une première portion du ressort étant placée dans un logement intérieur (12) de l'ensemble d'actionnement (5) et une seconde portion dudit ressort étant placée dans un logement (14) du noyau d'un côté du conduit (6) opposé à l'ensemble d'actionnement (5).

3. Vanne selon la revendication 1, **caractérisée en ce qu'**elle comprend au moins deux ensembles d'actionnement à clapet (5, 15) disposés dans les moyens de guidage (7) du noyau (4) de deux côtés opposés du conduit (6), lors du déplacement de chaque ensemble dans une position de fermeture partielle ou complète, chaque partie inférieure formant clapet (5b, 15b) des ensembles s'approchant l'une de l'autre pour fermer complètement ou partiellement le conduit longitudinal (6).

4. Vanne selon la revendication 3, **caractérisée en ce que** les moyens de rappel sont constitués par un ressort (8) traversant perpendiculairement le conduit longitudinal (6), une première portion du ressort étant placée dans un premier logement intérieur (12) du premier ensemble d'actionnement (5) et une seconde portion dudit ressort étant placée dans un second logement intérieur (16) du second ensemble d'actionnement (15).

5. Vanne selon la revendication 4, **caractérisée en ce que** les moyens de guidage (7) du noyau (4) sont de forme tubulaire s'étendant d'un côté du conduit (6) pour un ensemble d'actionnement (5) ou de deux côtés opposés du conduit pour deux ensembles d'actionnement (5, 15), l'axe longitudinal des moyens de guidage étant sensiblement perpendiculaire à l'axe longitudinal du conduit, et **en ce que** chaque ensemble d'actionnement comprend un anneau d'étanchéité (9) disposé dans une rainure circulaire (18) d'une partie intermédiaire de l'ensemble d'actionnement, l'anneau étant en contact avec la surface intérieure tubulaire des moyens de guidage.

6. Tuyau de douche (1) destiné à être connecté entre des moyens d'alimentation en eau sanitaire et une pomme de douche (10), ledit tuyau comprenant un flexible (2) de douche relié à une vanne à deux voies selon l'une des revendications précédentes, la vanne comprenant un corps (3) à l'intérieur duquel est logé une partie d'un noyau (4) traversé par un conduit longitudinal (6) reliant l'entrée et la sortie de la vanne pour le passage de l'eau, la vanne comprenant au moins un ensemble d'actionnement à clapet (5), des moyens de guidage (7) de l'ensemble d'actionnement dans le noyau (4) de la vanne et des moyens de rappel (8) de l'ensemble d'actionnement à une position de repos, l'ensemble d'actionnement à clapet (5) pouvant être déplacé dans une direction (D) sensiblement perpendiculaire à l'axe longitudinal du conduit (6) entre une position de fermeture partielle ou complète, dans laquelle une partie inférieure formant clapet (5b) de l'ensemble ferme partiellement ou complètement le conduit (6), et une position de repos, dans laquelle l'eau peut passer librement à travers le conduit (6) du noyau (4) entre l'entrée et la sortie de la vanne, l'ensemble d'actionnement à clapet (5) comprenant une partie supérieure (5a) débouchant hors du corps (3) de vanne et formée de telle manière à permettre le déplacement de l'ensemble de la position de repos à la position de fermeture partielle ou complète du conduit (6) lorsque la vanne est insérée dans un logement (21) d'un support mural (20) de douche de forme complémentaire à la forme extérieure du corps (3) de la vanne, **caractérisé en ce que** les moyens de rappel sont constitués par une surface inclinée de la partie inférieure formant clapet de l'ensemble d'actionnement de manière à amener l'ensemble d'actionnement vers sa position de repos par la force de l'eau dans le conduit, ou par un ressort (8) traversant perpendiculairement le conduit et poussant l'ensemble d'actionnement vers sa position de repos.

7. Tuyau de douche selon la revendication 6, **caractérisé en ce que** les moyens de rappel sont constitués par un ressort (8) traversant perpendiculairement le conduit longitudinal (6) de section transversale rectangulaire, une première portion du ressort étant placée dans un logement intérieur (12) de l'ensemble d'actionnement (5) et une seconde portion dudit ressort étant placée dans un logement (14) du noyau d'un côté du conduit (6) opposé à l'ensemble d'actionnement (5).

8. Tuyau de douche selon la revendication 6, **caractérisé en ce que** la vanne à deux voies comprend au moins deux ensembles d'actionnement à clapet (5, 15) disposés dans les moyens de guidage (7) du noyau (4) de deux côtés opposés du conduit (6), lors du déplacement de chaque ensemble dans une position de fermeture partielle ou complète, chaque partie inférieure formant clapet (5b, 15b) des ensembles s'approchant l'une de l'autre pour fermer complètement ou partiellement le conduit longitudinal (6).

9. Tuyau de douche selon la revendication 8, **caractérisé en ce que** les moyens de rappel sont constitués par un ressort (8) traversant perpendiculairement le conduit longitudinal (6), une première portion du ressort étant placée dans un premier logement intérieur (12) du premier ensemble d'actionnement (5) et une seconde portion dudit ressort étant placée dans un second logement intérieur (16) du second ensemble d'actionnement (15).

10. Tuyau de douche selon l'une des revendications 6 à 9, **caractérisé en ce que** les moyens de guidage (7) du noyau (4) sont de forme tubulaire s'étendant d'un côté du conduit (6) pour un ensemble d'actionnement (5) ou de deux côtés opposés du conduit pour deux ensembles d'actionnement (5, 15), l'axe longitudinal des moyens de guidage étant sensiblement perpendiculaire à l'axe longitudinal du conduit, et **en ce que** chaque ensemble d'actionnement comprend un anneau d'étanchéité (9) disposé dans une rainure circulaire (18) d'une partie intermédiaire de l'ensemble d'actionnement, l'anneau étant en contact avec la surface intérieure tubulaire des moyens de guidage (7).

## Claims

1. Two-way valve for a shower pipe (1), an inlet of said valve being intended to be removably connected to the shower hose (2) and an outlet of the valve being intended to be connected to a showerhead (10), said valve comprising a body (3) inside which is accommodated a portion of a core (4) through which passes a longitudinal water passage (6) connecting the inlet and the outlet of the valve, which valve comprises at least one actuating system (5) with a valve closure member, means (7) for guiding the actuating system in the core of the valve, and return means (8) for returning the actuating system to a rest position, the actuating system (5) with a valve closure member being adapted to be moved in a direction (D) substantially perpendicular to the longitudinal axis of the passage (6) between a position of partial or complete closure, in which a valve closure member lower portion (5b) of the system shuts off the passage (6) partly or completely, and a rest position, in which water may pass freely through the passage (6) of the core (4) between the inlet and the outlet of the valve, the actuating system (5) with a valve closure member comprising an upper portion (5a) projecting out of the valve body (3) and conformed to allow movement of the system from the rest position to the position of partial or complete closure of the passage (6) when the valve is inserted in a housing (21) of a wall-mounted showerhead holder (20) of complementary shape to the exterior shape of the body (3) of the valve, **characterised in that** the return means comprise an inclined surface of the valve closure member lower portion of the actuating system such that the actuating system is returned toward its rest position by the force of the water in the passage or by a spring (8) crossing the passage perpendicularly and pressing the actuating system towards its rest position.

2. Valve according to claim 1, **characterised in that** the return means comprise a spring (8) crossing perpendicularly the longitudinal passage (6) of a rectangular cross section, a first portion of the spring being placed in an interior housing (12) of the actuating system (5) and a second portion of said spring being placed in a housing (14) of the core at the end of the passage (6) opposite the actuating system (5).

3. Valve according to claim 1, **characterised in that** it comprises at least two actuating systems (5, 15) with a valve closure member disposed in the guide means (7) of the core (4) at two opposite ends of the passage (6) and, upon movement of each system to a position of partial or complete closure, the valve closure member lower portions (5b, 15b) of the systems moving towards each other to close the longitudinal passage (6) completely or partially.

4. Valve according to claim 3, **characterised in that** the return means comprise a spring (8) crossing the longitudinal passage (6) perpendicularly, a first portion of the spring being accommodated in a first interior housing (12) of the first actuating system (5) and a second portion of said spring being accommodated in a second interior housing (16) of the second actuating system (15).

5. Valve according to claim 4, **characterised in that** the guide means (7) of the core (4) are of tubular shape and extend from one end of the passage (6) in the case of one actuating system (5) or from two opposite ends of the passage in the case of two actuating systems (5, 15), the longitudinal axis of the guide means being substantially perpendicular to the longitudinal axis of the passage, and **in that** each actuating system comprises an O-ring (9) disposed in a circular groove (18) on an intermediate portion of the actuating system and in contact with the tubular interior surface of the guide means.

6. Shower pipe (1) intended to be connected between domestic water supply means and a showerhead (10), said pipe comprising a shower hose (2) connected to a two-way valve according to any of the preceding claims, the valve comprising a body (3) inside which is accommodated a portion of a core (4) through which passes a longitudinal water passage (6) connecting the inlet and the outlet of the valve, the valve comprising at least one actuating system (5) with a valve closure member, means (7) for guiding the actuating system in the core (4) of the valve and means (8) for returning the actuating system to a rest position, the actuating system with a valve closure member (5) adapted to be moved in a direction (D) substantially perpendicular to the longitudinal axis of the passage (6) between a position of partial or complete closure, in which a lower portion of the system (5b) forming a valve closure member shuts off the passage (6) partially or completely, and a rest position in which water may pass freely through the passage (6) of the core (4) between the inlet and the outlet of the valve, the actuating system (5) with a valve closure member having an upper portion (5a) projecting out of the valve body (3) and conformed to allow movement of the system from the rest position to the position of partial or complete closure of the passage (6) when the valve is inserted into a housing (21) of a wall-mounted showerhead holder (20) whose shape is complementary to the exterior shape of the body (3) of the valve, **characterised in that** the return means comprise an inclined surface of the valve closure member lower portion of the actuating system such that the actuating system is returned toward its rest position by the force of the water in the passage or by a spring (8) crossing the passage perpendicularly and pressing the actuating system towards its rest position.

7. Shower pipe according to claim 6, **characterised in that** the return means comprise a spring (8) crossing perpendicularly the longitudinal passage (6) of a rectangular cross section, a first portion of the spring being placed in an interior housing (12) of the actuating system (5) and a second portion of said spring being placed in a housing (14) of the core at the end of the passage (6) opposite the actuating system (5).

8. Shower pipe according to claim 6, **characterised in that** the two-way valve comprises at least two actuating systems (5, 15) with a valve closure member disposed in the guide means (7) of the core (4) on two opposite sides of the passage (6), each valve closure member lower portion (5b, 15b) of one of the systems moving towards the other upon movement of each system into a position of partial or complete closure to shut off the longitudinal passage (6) completely or partially.

9. Shower pipe according to claim 8, **characterised in that** the return means comprise a spring (8) crossing the longitudinal passage (6) perpendicularly, a first portion of the spring being accommodated in a first interior housing (12) of the first actuating system (5) and a second portion of said spring being accommodated in a second interior housing (16) of the second actuating system (15).

10. Shower pipe according to any of claims 6 to 9, **characterised in that** the guide means (7) of the core (4) are of tubular shape and extend from one end of the passage (6) in the case of one actuating system (5) or from two opposite ends of the passage in the case of two actuating systems (5, 15), the longitudinal axis of the guide means being substantially perpendicular to the longitudinal axis of the passage, and **in that** each actuating system comprises an O-ring (9) disposed in a circular groove (18) in an intermediate part of the actuating system, the O-ring being in contact with the tubular interior surface of the guide means (7).

## Patentansprüche

1. Zweiwegeventil für einen Brauseschlauch (1), wobei ein Einlass des Ventils dazu bestimmt ist, mit dem Druckschlauch der Brause (2) lösbar verbunden zu werden, und ein Auslass des Ventils dazu bestimmt ist, mit einem Duschkopf (10) verbunden zu werden, wobei das Ventil einen Körper (3) umfasst, in dem sich ein Teil eines Kerns (4) befindet, durch den eine longitudinale Leitung (6) verläuft, die den Einlass und den Auslass des Ventils für den Durchgang des Wassers verbindet, wobei das Ventil wenigstens eine Schieberbetätigungseinheit (5), Mittel (7) zum Führen der Betätigungseinheit im Kern des Ventils sowie Mittel (8) zum Zurückstellen der Betätigungseinheit in eine Ruheposition umfasst, wobei die Schieberbetätigungseinheit (5) in einer Richtung (D), die zu der Längsachse der Leitung (6) im Wesentlichen senkrecht ist, zwischen einer Stellung mit teilweisem oder vollständigem Verschluss, in der der einen Schieber (5b) bildende untere Teil der Einheit die Leitung (6) teilweise oder vollständig verschließt, und einer Ruheposition, in der sich das Wasser zwischen dem Einlass und dem Auslass des Ventils frei durch die Leitung (6) des Kerns (4) bewegen kann, verlagert werden kann, wobei die Schieberbetätigungseinheit (5) einen oberen Teil (5a), der aus dem Körper (3) des Ventils vorsteht und in der Weise ausgebildet ist, dass er die Verlagerung der Einheit aus der Ruheposition in die Position des teilweisen oder vollständigen Verschlusses der Leitung (6) ermöglicht, wenn das Ventil in einen Aufnahmesitz (21) eines Wandträgers (20) der Brause mit zu der äußeren Form des Körpers (3) des Ventils komplementärer Form eingesetzt ist, **dadurch gekennzeichnet, dass** die Rückstellmittel durch eine schräge Oberfläche des den Schieber der Betätigungseinheit bildenden unteren Teils gebildet sind, derart, dass die Betätigungseinheit durch die Kraft des Wassers in der Leitung oder durch eine Feder (8), die senkrecht durch die Leitung verläuft und die Betätigungseinheit in ihre Ruheposition schiebt, in ihre Ruheposition geführt wird.

2. Ventil nach Anspruch 1, **dadurch gekennzeichnet, dass** die Rückstellmittel durch eine Feder (8) gebildet sind, die senkrecht durch die longitudinale Leitung (6) mit rechtwinkligem transversalen Querschnitt verläuft, wobei ein erster Abschnitt der Feder in einem inneren Aufnahmesitz (12) der Betätigungseinheit (5) angeordnet ist und ein zweiter Abschnitt der Feder in einem Aufnahmesitz (14) des Kerns auf einer Seite der Leitung (6), die sich gegenüber der Betätigungseinheit (5) befindet, angeordnet ist.

3. Ventil nach Anspruch 1, **dadurch gekennzeichnet, dass** es wenigstens zwei Schieberbetätigungseinheiten (5, 15) umfasst, die in den Mitteln (7) zum Führen des Kerns (4) auf zwei gegenüberliegenden Seiten der Leitung (6) angeordnet sind, wobei bei einer Verlagerung jeder Einheit in eine Position des teilweisen oder vollständigen Verschlusses jeder einen Schieber (5b, 15b) bildende untere Teil der Einheiten sich dem jeweils anderem annähert, um die longitudinale Leitung (6) vollständig oder teilweise zu verschließen.

4. Ventil nach Anspruch 3, **dadurch gekennzeichnet, dass** die Rückstellmittel durch eine Feder (8) gebildet sind, die senkrecht durch die longitudinale Leitung (6) verläuft, wobei ein erster Abschnitt der Feder in einem ersten inneren Aufnahmesitz (12) der ersten Betätigungseinheit (5) angeordnet ist und ein zweiter Abschnitt der Feder in einem zweiten inneren Aufnahmesitz (16) der zweiten Betätigungseinheit (15) angeordnet ist.

5. Ventil nach Anspruch 4, **dadurch gekennzeichnet, dass** die Mittel (7) zum Führen des Kerns (4) rohrförmig sind und sich von einer Seite der Leitung (6) im Fall einer Betätigungseinheit (5) oder von zwei gegenüberliegenden Seiten der Leitung im Fall von zwei Betätigungseinheiten (5, 15) erstrecken, wobei die Längsachse der Führungsmittel zu der Längsachse der Leitung im Wesentlichen senkrecht ist, und dass jede Betätigungseinheit einen Dichtungsring (9) aufweist, der in einer kreisförmigen Rille (18) eines Zwischenteils der Betätigungseinheit angeordnet ist, wobei der Ring mit der rohrförmigen inneren Oberfläche der Führungsmittel in Kontakt ist.

6. Brauseschlauch (1), der dazu bestimmt ist, zwischen Sanitärwasser-Versorgungsmitteln und einem Duschkopf (10) angeschlossen zu werden, wobei der Schlauch einen Brausedruckschlauch (2), der mit einem Zweiwegeventil nach einem der vorhergehenden Ansprüche verbunden ist, aufweist, wobei das Ventil einen Körper (3) umfasst, in dem sich ein Teil eines Kerns (4) befindet, durch den eine longitudinale Leitung (6) verläuft, die mit dem Einlass und dem Auslass des Ventils für den Durchgang des Wassers verbunden ist, wobei das Ventil wenigstens eine Schieberbetätigungseinheit (5), Mittel (7) zum Führen der Betätigungseinheit im Kern (4) des Ventils sowie Mittel (8) zum Zurückstellen der Betätigungseinheit in eine Ruheposition umfasst, wobei die Schieberbetätigungseinheit (5) in einer Richtung (D), die zu der Längsachse der Leitung (6) im Wesentlichen senkrecht ist, zwischen einer Position des teilweisen oder vollständigen Verschlusses, in der ein einen Schieber (5b) bildender unterer Teil der Einheit die Leitung (6) teilweise oder vollständig verschließt, und einer Ruheposition, in der sich Wasser zwischen dem Einlass und dem Auslass des Ventils frei durch die Leitung (6) des Kerns (4) bewegen kann, verlagert werden kann, wobei die Schieberbetätigungseinheit (5) einen oberen Teil (5a) aufweist, der aus dem Körper (3) des Ventils vorsteht und in der Weise ausgebildet ist, dass er die Verlagerung der Einheit aus der Ruheposition in die Position des teilweisen oder vollständigen Verschlusses der Leitung (6) ermöglicht, wenn das Ventil in einen Aufnahmesitz (1) eines Wandträgers (20) der Brause mit zu der äußeren Form des Körpers (3) des Ventils komplementärer Form eingesetzt ist, **dadurch gekennzeichnet, dass** die Rückstellmittel durch eine schräge Oberfläche des eine Schieber bildenden unteren Teils der Betätigungseinheit gebildet sind, derart, dass die Betätigungseinheit durch die Kraft des Wassers in der Leitung oder durch eine Feder (8), die senkrecht durch die Leitung verläuft und die Betätigungseinheit in ihre Ruheposition schiebt, in ihre Ruheposition geführt wird.

7. Brauseschlauch nach Anspruch 6, **dadurch gekennzeichnet, dass** die Rückstellmittel durch eine Feder (8) gebildet sind, die senkrecht durch die longitudinale Leitung (6) mit rechtwinkligem transversalem Querschnitt verläuft, wobei ein erster Abschnitt der Feder in einem inneren Aufnahmesitz (12) der Betätigungseinheit (5) angeordnet ist und ein zweiter Abschnitt der Feder in einem Aufnahmesitz (14) des Kerns auf einer Seite der Leitung (6) gegenüber der Betätigungseinheit (5) angeordnet ist.

8. Brauseschlauch nach Anspruch 6, **dadurch gekennzeichnet, dass** das Zweiwegeventil wenigstens zwei Schieberbetätigungseinheiten (5, 15) umfasst, die in den Mitteln (7) zum Führen des Kerns (4) auf zwei gegenüberliegenden Seiten der Leitung (6) angeordnet sind, wobei bei einer Verlagerung jeder Einheit in eine Position des teilweisen oder vollständigen Verschlusses jeder einen Schieber bildende untere Teil (5b, 15b) der Einheiten sich dem jeweils anderen annähert, um die longitudinale Leitung (6) vollständig oder teilweise zu verschließen.

9. Brauseschlauch nach Anspruch 8, **dadurch gekennzeichnet, dass** die Rückstellmittel durch eine Feder (8) gebildet sind, die senkrecht durch die longitudinale Leitung (6) verläuft, wobei ein erster Abschnitt der Feder in einem ersten inneren Aufnahmesitz (12) der ersten Betätigungseinheit (5) angeordnet ist und ein zweiter Abschnitt der Feder in einem zweiten inneren Aufnahmesitz (16) der zweiten Betätigungseinheit (15) angeordnet ist.

10. Brauseschlauch nach einem der Ansprüche 6 bis 9, **dadurch gekennzeichnet, dass** die Mittel (7) zum Führen des Kerns (4) rohrförmig sind und sich von einer Seite der Leitung (6) im Fall einer Betätigungseinheit (4) oder von zwei gegenüberliegenden Seiten der Leitung im Fall von zwei Betätigungseinheiten (5, 15) erstrecken, wobei die Längsachse der Führungsmittel zur Längsachse der Leitung im Wesentlichen senkrecht ist, und dass jede Betätigungseinheit einen Dichtungsring (9) aufweist, der in einer Dichtungsrille (18) eines Zwischenteils der Betätigungseinheit angeordnet ist, wobei der Ring mit der rohrförmigen inneren Oberfläche der Führungsmittel (7) in Kontakt ist.
